# EUROPEAN PATENT APPLICATION

(11) **EP 4 768 190 A1**
(43) Date of publication of application: **01.07.2026**
(21) Application number: 25212071.2
(22) Date of filing: 29.10.2025
(51) Int. Cl.: B25F 5/00, H02H 1/04

(54) **SWITCH CONTROL DEVICE AND OPERATION METHOD THEREOF**

(30) Priority: 25.12.2024 TW 113150742
(71) Applicant: Basso Industry Corp., Taichung City 40768 (TW)
(72) Inventor: TSAI, Cheng-en, 40768 Taichung City (TW); WU, Tsung-han, 40768 Taichung City (TW); LIAO, Jyun-jia, 40768 Taichung City (TW)
(74) Representative: Murgitroyd & Company

(57) **Abstract**

A switch control device and an operation method thereof are provided. The switch control device comprises a trigger switch (2), a self-maintaining circuit (3), and a control unit (4). When the trigger switch (2) is pressed, the control unit (4) is operated to stop the self-maintaining circuit (3) from supplying power, thereby stabilizing the power source of the control unit (4).

## Description

### CROSS REFERENCE TO RELATED APPLICATIONS

This application claims priority to Taiwan Application Serial Number 113150742, filed on December 25, 2024, which is incorporated herein by reference.

### FIELD OF INVENTION

The present disclosure relates to a switch control device and an operation method thereof, in particular, to a switch control device and an operation method thereof for use in power tools.

### BACKGROUND OF INVENTION

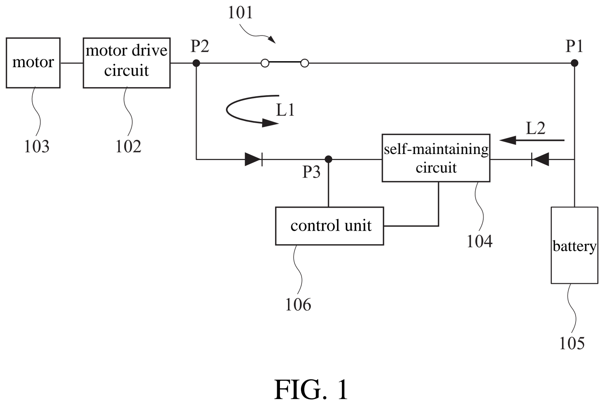

As shown in FIG. 1, a schematic diagram of a conventional switch control device for use in a power tool, such as an electric bolt fastening tool, is illustrated. The switch control device includes a trigger switch 101 disposed between a node P1 and a node P2, a motor drive circuit 102 coupled to the trigger switch 101, a motor 103 coupled to the motor drive circuit 102, a self-maintaining circuit 104 coupled to the motor drive circuit 102, and a battery 105 coupled to the self-maintaining circuit 104. The node P1 is configured to be coupled to the battery 105, and the node P3 is configured to be coupled to a control unit 106.

When the trigger of the power tool is lightly pulled, the trigger switch 101 is turned on, and the power of the battery 105 is supplied to the control unit 106 via path L1 to node P3. When the trigger of the power tool is released, the control unit 106 operates the self-maintaining circuit 104 to turn on, and the power of the battery 105 is supplied to the control unit 106 through path L2 to node P3.

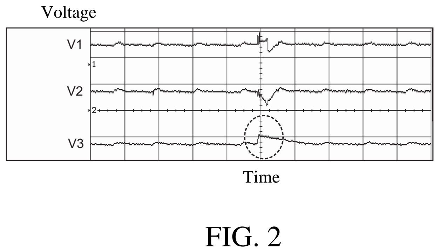

As shown in FIG. 1 and FIG. 2, FIG. 2 is a timing diagram of the input voltage and system voltage in FIG. 1, wherein the nodes P1, P2, and P3 correspond to voltages V1, V2, and V3, respectively. When the trigger of the power tool is continuously pressed, if the internal state of the trigger switch 101 is abnormal (for example, poor metal contact), the power of the battery 105 will flow from the self-maintaining circuit 104 along the path L2 to the control unit 106, causing the voltage V3 of the node P3 to rise briefly (as circled in FIG. 2), thereby making the electronic components in the control unit 106 vulnerable to damage.

As a result, it is necessary to provide a switch control device and an operation method thereof to solve the problems existing in the conventional technologies, as described above.

### SUMMARY OF INVENTION

An object of the present disclosure is to provide a switch control device and an operation method thereof. Under the condition that a trigger switch is pressed, a control unit operates to cause a self-maintaining circuit to stop supplying power, thereby achieving a stabilizing effect on the power supply source of the control unit.

According to the aforementioned object, a switch control device is provided. The switch control device includes a trigger switch, a self-maintaining circuit, and a control unit. The trigger switch is coupled between a battery and a motor drive circuit, wherein the motor drive circuit is configured to drive a motor. The self-maintaining circuit is coupled to the battery. The control unit is coupled to the self-maintaining circuit, wherein the control unit is configured to: while the trigger switch is being continuously pressed, the self-maintaining circuit is operated to stop the battery from supplying power to the control unit via the self-maintaining circuit.

According to an embodiment of the present disclosure, the self-maintaining circuit comprises a first switch and a second switch; the first switch is coupled to the battery, and the second switch is coupled to the first switch.

According to an embodiment of the present disclosure, the control unit comprises a controller and a voltage converter coupled to each other, the controller is coupled to the second switch, and the voltage converter is coupled to the first switch.

According to the aforementioned object, an operation method of a switch control device is provided. The switch control device comprises a trigger switch, a self-maintaining circuit, and a control unit. The trigger switch is coupled between a battery and a motor drive circuit. The motor drive circuit is configured to drive a motor, and the control unit is coupled to the self-maintaining circuit. The operation method comprises: while the trigger switch is being continuously pressed, the self-maintaining circuit is operated by the control unit to stop the battery from supplying power to the control unit via the self-maintaining circuit.

According to an embodiment of the present disclosure, the self-maintaining circuit comprises a first switch and a second switch, the first switch is coupled to the battery, and the second switch is coupled to the first switch; the control unit comprises a controller and a voltage converter coupled to each other, the controller is coupled to the second switch, and the voltage converter is coupled to the first switch, the operation method further comprises: step S201: continuously determining, by the controller, whether the trigger switch is being pressed; if yes, proceeding to a subsequent step, and if not, executing termination; step S202: operating the second switch through the controller to stop the battery from supplying power to the voltage converter via the self-maintaining circuit; and step S203: activating the motor to operate by the controller.

According to an embodiment of the present disclosure, in step S202, a control signal is transmitted through the controller to the second switch to turn off the second switch so as to stop the battery from supplying power to the voltage converter through the self-maintaining circuit.

According to an embodiment of the present disclosure, the controller transmits the control signal maintained at a low-level voltage to keep the second switch in an off state.

According to an embodiment of the present disclosure, after step S203, the operation method further comprises: step S204: determining, by the controller, whether the trigger switch is released; if yes, proceeding to a subsequent step, and if not, continuously driving the motor to operate; step S205: operating the second switch by the controller to activate the battery to supply power to the voltage converter through the self-maintaining circuit; and step S206: stopping the motor from operating by the controller.

According to an embodiment of the present disclosure, in step S205, transmitting, by the controller, a control signal to the second switch to turn on the second switch so as to activate the battery to supply power to the voltage converter through the self-maintaining circuit.

According to an embodiment of the present disclosure, the controller transmits the control signal maintained at a high-level voltage to keep the second switch in an on state.

As described above, when the trigger switch is pressed, the controller of the control unit operates the second switch of the self-maintaining circuit to remain in an off state so that the self-maintaining circuit can stop supplying power to the voltage converter of the control unit. Accordingly, the power supply of the control unit is not affected by an abnormal internal state of the trigger switch, thereby achieving a stabilizing effect on the power source of the voltage converter and preventing the electronic components of the controller from being damaged due to severe voltage fluctuations.

### DESCRIPTION OF DRAWINGS

FIG. 1 is a schematic diagram of a conventional switch control device for use in a power tool.
FIG. 2 is a timing diagram of the input voltage and system voltage in FIG. 1.
FIG. 3 is a schematic diagram of a switch control device with a trigger switch released according to an embodiment of the present disclosure.
FIG. 4 is a schematic diagram of a switch control device with a trigger switch pressed according to an embodiment of the present disclosure.
FIG. 5 is a timing diagram of the input voltage and system voltage in FIG. 4.
FIG. 6 is a flowchart of an operation method of a switch control device according to an embodiment of the present disclosure.

### DETAILED DESCRIPTION OF PREFERRED EMBODIMENTS

In order to make the above and other purposes, features, and advantages of the present disclosure more comprehensible, preferred embodiments of the present disclosure will be described below in detail together with the attached drawings. It should be noted that the drawings are simplified schematic diagrams and therefore only show the components and combination relationships related to the present disclosure to provide a clearer description of the basic structure or implementation method of the present disclosure, while the actual components and layout may be more complicated. Additionally, for the purpose of illustration, the components shown in the drawings of the present disclosure are not drawn to scale in terms of actual number, shape, or size. The detailed proportions can be adjusted according to design requirements.

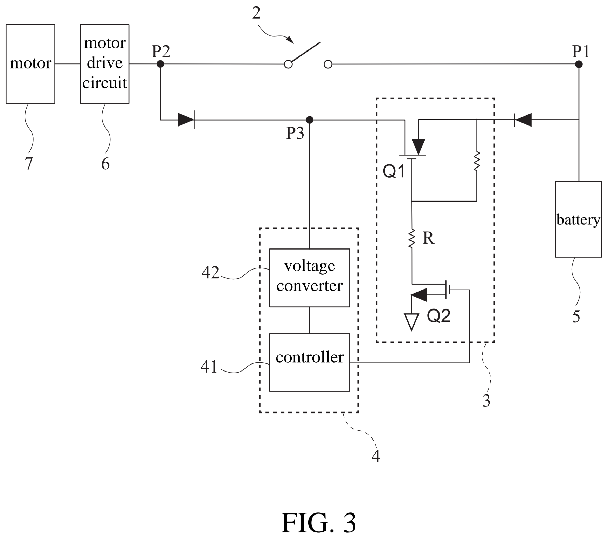

Please refer to FIG. 3, a schematic diagram of a switch control device with a trigger switch released according to an embodiment of the present disclosure is illustrated. The switch control device includes a trigger switch 2, a self-maintaining circuit 3, and a control unit 4. The detailed structure, connection relationship, and operation principles of each component will be described in detail below.

The trigger switch 2 is coupled between a battery 5 (e.g., a power supply device) and a motor drive circuit 6. The trigger switch 2 is coupled with the battery 5 at node P1, and the trigger switch 2 is coupled with the motor drive circuit 6 at node P2. The motor drive circuit 6 is coupled to a motor 7, and the motor drive circuit 6 is configured to drive the motor 7 into operation. The self-maintaining circuit 3 is coupled to the battery 5, and a control unit 4 is coupled to the self-maintaining circuit 3. In the embodiment, during the process in which the trigger switch 2 is continuously pressed, the control unit 4 is configured to operate the self-maintaining circuit 3 so as to stop the battery 5 from supplying power to the control unit 4 via the self-maintaining circuit 3.

Furthermore, the self-maintaining circuit 3 includes a first switch Q1 and a second switch Q2, wherein the first switch Q1 is coupled to the battery 5 and the second switch Q2 is coupled to the first switch Q1. The control unit 4 includes a controller 41 (e.g., a microcontroller) and a voltage converter 42 that are coupled to each other, wherein the controller 41 is coupled to the second switch Q2, and the voltage converter 42 is coupled to the first switch Q1. In the embodiment, the second switch Q2 has a first terminal coupled to the controller 41, a second terminal coupled to a connection resistor R, and a third terminal connected to ground. The first switch Q1 has a first terminal coupled to the connection resistor R, a second terminal coupled to the battery 5, and a third terminal coupled to the voltage converter 42, wherein the voltage converter 42 and the third terminal of the first switch Q1 are coupled at node P3.

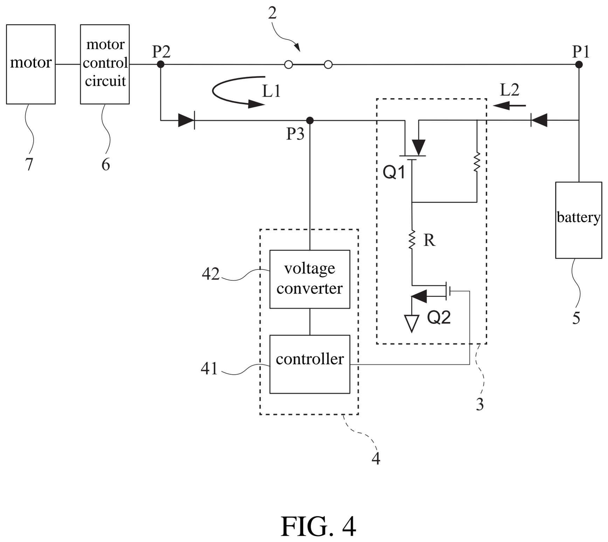

As shown in FIG. 4, when the trigger is lightly pressed, the trigger switch 2 is turned on, and the power of the battery 5 flows through the trigger switch 2 along path L1 into node P3, thereby supplying an operating power source to the voltage converter 42 to wake up the controller 41. After the controller 41 is awakened, the controller 41 sends a control signal to the second switch Q2 to turn on the first switch Q1 (transistor). At this time, when the trigger switch 2 is released, the battery 5 supplies power to the control unit 4 via the self-maintaining circuit 3 along path L2 through node P3 so as to continuously provide power to the control unit 4.

When the trigger switch 2 is fully pressed, the controller 41 continuously determines whether the trigger switch 2 remains pressed. Under the condition that the trigger switch 2 is continuously pressed, the controller 41 operates the second switch Q2, for example, by turning off the second switch Q2, so as to stop the battery 5 from supplying power to the voltage converter 42 via the self-maintaining circuit 3. Subsequently, the controller 41 outputs a signal to the motor drive circuit 6 to drive the motor 7 into operation.

After that, the controller 41 determines whether the trigger switch 2 has been released. When the trigger switch 2 is released, the controller 41 operates the second switch Q2, for example, by turning on the second switch Q2, so as to enable the battery 5 to supply power to the voltage converter 42 via the self-maintaining circuit 3. The controller 41 then outputs a signal to the motor drive circuit 6 to stop the operation of the motor 7.

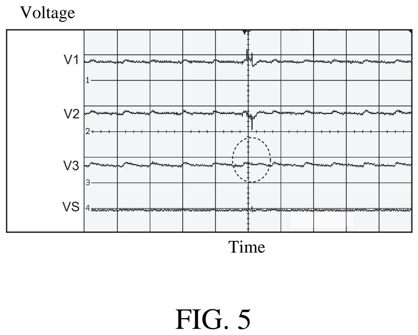

According to the above structure, when the trigger switch 2 is pressed as shown in FIG. 4, the controller 41 operates the second switch Q2 to remain in an off state. When an abnormal internal condition occurs in the trigger switch 2 (e.g., poor metal contact), the voltage V1 at node P1 and the voltage V2 at node P2 fluctuate (as shown in FIG. 5). The power of the battery 5 is supplied along path L1, and the self-maintaining circuit 3 does not supply power to the voltage converter 42, so that the voltage V3 at node P3 is not affected by the fluctuations of voltages V1 and V2. This achieves a stabilizing effect on the power source of the voltage converter 42 (as indicated in the circled portion of FIG. 5), thereby preventing the electronic components of the controller 41 from being damaged due to severe voltage fluctuations.

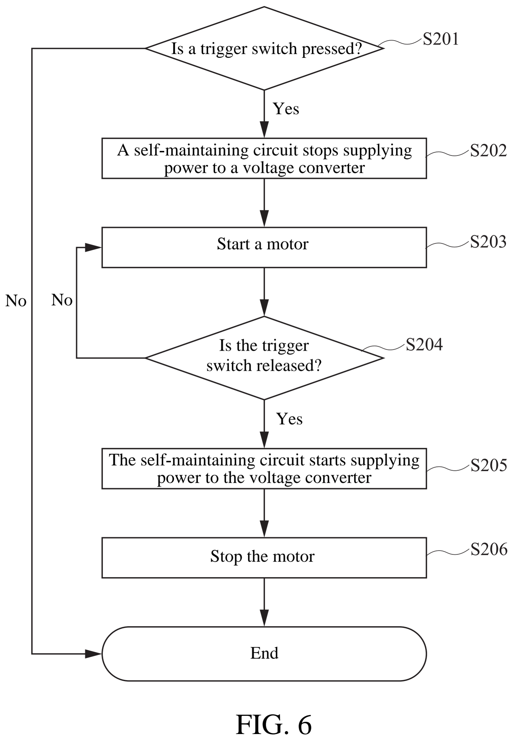

Referring to FIG. 6, a flowchart of an operation method of a switch control device according to an embodiment of the present disclosure is illustrated. The operation method is performed by means of the above-described switch control device, and the operation method includes step S201, step S202, step S203, step S204, step S205, and step S206. The detailed principles of operation in the present disclosure will be described in detail hereinafter.

In step S201, with reference to FIG. 4, the controller 41 of the control unit 4 continuously determines whether the trigger switch 2 is pressed. If yes, the process proceeds to step S202; if not, the process executes termination. In the embodiment, when the trigger switch 2 is initially pressed, a control signal sent by the controller 41 generates an instantaneous high-level voltage to turn on the second switch Q2, and the voltage of the control signal then immediately drops to a low-level voltage VS (see FIG. 5).

In step S202, the controller 41 operates the second switch Q2 to stop the battery 5 from supplying power to the voltage converter 42 of the control unit 4 via the self-maintaining circuit 3. In step S203, the controller 41 outputs a signal to the motor drive circuit 6 to drive the motor 7 into operation. In the embodiment, the controller 41 turns off the second switch Q2 by sending a control signal to the second switch Q2, thereby stopping the power of the battery 5 from being supplied to the voltage converter 42 via the self-maintaining circuit 3 along path L2, wherein the control signal sent by the controller 41 remains at a low-level voltage so as to keep the second switch Q2 in an off state.

In step S204, the controller 41 determines whether the trigger switch 2 has been released. If yes, the process proceeds to step S205; if not, the controller 41 continues to drive the motor 7 into operation. In step S205, the controller 41 operates the second switch Q2 to enable the battery 5 to supply power to the voltage converter 42 via the self-maintaining circuit 3. In step S206, the controller 41 stops the operation of the motor 7. In the embodiment, the controller 41 turns on the second switch Q2 by sending a control signal to the second switch Q2 so as to enable the battery 5 to supply power to the voltage converter 42 via the self-maintaining circuit 3 along path L2, wherein the control signal sent by the controller 41 remains at a high-level voltage to maintain the second switch Q2 in an on state.

As described above, when the trigger switch 2 is pressed, the controller 41 of the control unit 4 operates the second switch Q2 of the self-maintaining circuit 3 to remain in an off state so that the self-maintaining circuit 3 can stop supplying power to the voltage converter 42. Accordingly, the voltage V3 at node P3 is not affected by an abnormal internal state of the trigger switch 2, thereby achieving a stabilizing effect on the power source of the voltage converter 42 and preventing the electronic components of the controller 41 from being damaged due to severe voltage fluctuations.

It should be noted that although certain aspects have been described in the context of the present disclosure, it should be understood that the described aspects also represent corresponding descriptions of methods. Accordingly, a system or structural element should also be interpreted as a corresponding method step or a feature of a method step. Similarly, content described in the context of method steps or as method steps also represents descriptions of corresponding blocks, details, or features of the corresponding apparatus. Some or all of the method steps may be carried out using hardware devices such as a microcontroller, a programmable computer, or a motor drive circuit. In some embodiments, some or several of the most significant method steps may be performed by such devices.

Although the present disclosure has been disclosed through embodiments, it is not intended to limit the present disclosure. Any person skilled in the art may make various modifications and variations without departing from the spirit and scope of the present disclosure. Therefore, the scope of protection of the present disclosure shall be defined by the appended claims.

## Claims

1. A switch control device, **characterized in that** the switch control device comprises:
a trigger switch (2) coupled between a battery (5) and a motor drive circuit (6), wherein the motor drive circuit (6) is configured to drive a motor (7);
a self-maintaining circuit (3) coupled to the battery (5); and
a control unit (4) coupled to the self-maintaining circuit (3), wherein the control unit (4) is configured to:
while the trigger switch (2) is being continuously pressed, the self-maintaining circuit (3) is operated to stop the battery (5) from supplying power to the control unit (4) via the self-maintaining circuit (3).

2. The switch control device as claimed in claim 1, **characterized in that** the self-maintaining circuit (3) comprises a first switch (Q1) and a second switch (Q2), the first switch (Q1) is coupled to the battery (5), and the second switch (Q2) is coupled to the first switch (Q1).

3. The switch control device as claimed in claim 2, **characterized in that** the control unit (4) comprises a controller (41) and a voltage converter (42) coupled to each other, the controller (41) is coupled to the second switch (Q2), and the voltage converter (42) is coupled to the first switch (Q1).

4. An operation method of a switch control device, **characterized in that** the switch control device comprises a trigger switch (2), a self-maintaining circuit (3), and a control unit (4), the trigger switch (2) is coupled between a battery (5) and a motor drive circuit (6), the motor drive circuit (6) is configured to drive a motor (7), and the control unit (4) is coupled to the self-maintaining circuit (3), the operation method comprises:
while the trigger switch (2) is being continuously pressed, the self-maintaining circuit (3) is operated by the control unit (4) to stop the battery (5) from supplying power to the control unit (4) via the self-maintaining circuit (3).

5. The operation method of a switch control device as claimed in claim 4, **characterized in that** the self-maintaining circuit (3) comprises a first switch (Q1) and a second switch (Q2), the first switch (Q1) is coupled to the battery (5), and the second switch (Q2) is coupled to the first switch (Q1); the control unit (4) comprises a controller (41) and a voltage converter (42) coupled to each other, the controller (41) is coupled to the second switch (Q2), and the voltage converter (42) is coupled to the first switch (Q1), the operation method further comprises:
step S201: continuously determining, by the controller (41), whether the trigger switch (2) is being pressed; if yes, proceeding to a subsequent step, and if not, executing termination;
step S202: operating the second switch (Q2) through the controller (41) to stop the battery (5) from supplying power to the voltage converter (42) via the self-maintaining circuit (3); and
step S203: activating the motor (7) to operate by the controller (41).

6. The operation method of a switch control device as claimed in claim 5, **characterized in that** in step S202, a control signal is transmitted through the controller (41) to the second switch (Q2) to turn off the second switch (Q2) so as to stop the battery (5) from supplying power to the voltage converter (42) through the self-maintaining circuit (3).

7. The operation method of a switch control device as claimed in claim 6, **characterized in that** the controller (41) transmits the control signal maintained at a low-level voltage to keep the second switch (Q2) in an off state.

8. The operation method of a switch control device as claimed in claim 5, **characterized in that** after step S203, the operation method further comprises:
step S204: determining, by the controller (41), whether the trigger switch (2) is released; if yes, proceeding to a subsequent step, and if not, continuously driving the motor (7) to operate;
step S205: operating the second switch (Q2) by the controller (41) to activate the battery (5) to supply power to the voltage converter (42) through the self-maintaining circuit (3); and
step S206: stopping the motor (7) from operating by the controller (41).

9. The operation method of a switch control device as claimed in claim 8, **characterized in that** in step S205, a control signal is transmitted by the controller (41) to the second switch (Q2) to turn on the second switch (Q2), so as to activate the battery (5) to supply power to the voltage converter (42) through the self-maintaining circuit (3).

10. The operation method of a switch control device as claimed in claim 8, **characterized in that** the controller (41) transmits the control signal maintained at a high-level voltage to keep the second switch (Q2) in an on state.
